Europäisches Patentamt

European Patent Office

Office européen des brevets

(19)

(11) **EP 0 755 524 B1**

(12) **FASCICULE DE BREVET EUROPEEN**

| | |
|---|---|
| (45) Date de publication et mention de la délivrance du brevet: **12.01.2000 Bulletin 2000/02** | (51) Int Cl.$^7$: **G01S 13/92** |
| (21) Numéro de dépôt: **95916740.4** | (86) Numéro de dépôt international: **PCT/FR95/00464** |
| (22) Date de dépôt: **11.04.1995** | (87) Numéro de publication internationale: **WO 95/28653 (26.10.1995 Gazette 1995/46)** |

(54) **PROCEDE DE SURVEILLANCE DE TRAFIC POUR LA DETECTION AUTOMATIQUE D'INCIDENT DE VEHICULES**

VERFAHREN ZUR VERKEHRÜBERWACHUNG FÜR DIE AUTOMATISCHE FAHRZEUG VOR FALLERKENNUNG

TRAFFIC MONITORING METHOD FOR THE AUTOMATIC DETECTION OF VEHICLE-RELATED INCIDENTS

| | |
|---|---|
| (84) Etats contractants désignés: **AT BE CH DE DK ES FR GB IT LI NL PT SE** | (72) Inventeur: **LION, Didier F-92402 Courbevoie Cédex (FR)** |
| (30) Priorité: **15.04.1994 FR 9404522** | (74) Mandataire: **Benoit, Monique et al Thomson-CSF Propriété Intellectuelle, 13, Avenue du Président Salvador Allende 94117 Arcueil Cédex (FR)** |
| (43) Date de publication de la demande: **29.01.1997 Bulletin 1997/05** | |
| (73) Titulaire: **THOMSON-CSF 75008 Paris (FR)** | (56) Documents cités: **EP-A- 0 188 694** **EP-A- 0 286 910** **EP-A- 0 308 324** **EP-A- 0 335 009** |

**Description**

La présente invention a pour objet un procédé de surveillance de trafic pour la détection automatique d'incident de véhicules.

L'application plus particulièrement visée par l'invention concerne la surveillance du trafic routier ou autoroutier, classiquement appelée par le nom générique de Détection Automatique d'Incident (D.A.I.).

Dans cette application, on recherche notamment à pouvoir détecter un véhicule s'arrêtant sur les voies de circulation ou sur les bandes d'arrêt d'urgence. D'autres paramètres peuvent être intéressants à fournir, comme la détection de bouchons ou l'état de la circulation.

La surveillance du trafic sur route ou autoroute est très importante car elle a pour but d'améliorer la fluidité du trafic et la sécurité des usagers. Il est donc primordial de savoir détecter au plus vite tout incident ou ralentissement, afin de prévenir les usagers par panneaux indicateurs à messages variables, limitant de ce fait les risques de carambolages, et faire intervenir les secours rapidement si nécessaire.

La surveillance du trafic routier est à ce jour réalisée par différentes techniques que l'on peut classer en deux catégories, d'une part les techniques fondées sur une analyse ponctuelle d'une section de route ou d'autoroute, et d'autre part, les techniques fondées sur une analyse globale de cette même section:

Dans le premier cas, seuls certains points de la route, situés à des distances prédéterminées les uns par rapport aux autres, sont observés. L'analyse de paramètres de trafic en ces différents points, tels que la vitesse moyenne des véhicules ou le débit, permet de détecter, par application d'algorithmes de calcul particuliers, les conséquences d'un incident éventuel entre ces points.

Une première technologie très largement utilisée consiste à placer, sous la route, des boucles à induction. La variation du champ induit dans de telles boucles permet de savoir si un véhicule est passé ou non. L'avantage principal de cette technologie réside dans le fait que les boucles à induction fonctionnent quelles que soient les conditions climatiques, de jour comme de nuit. Cependant, l'implantation de ces boucles est lourde et coûteuse à mettre en oeuvre, et il est difficile, voire impossible, de procéder à des entretiens ou à des échanges de boucles en cas de panne.

Une seconde technologie consiste à utiliser des caméras vidéo situées aux différents points que l'on souhaite analyser sur une section donnée, chaque caméra étant associée à un traitement d'images automatique. L'implantation des caméras vidéo est très simple, mais les performances sont peu concluantes car elles dépendent fortement des conditions climatiques et des conditions de luminosité. En outre, les algorithmes utilisés dans le traitement d'images sont complexes, et nécessitent une puissance de calcul importante.

Pour pallier le problème des conditions climatiques, une troisième technologie connue, mettant toujours en oeuvre une technique d'analyse ponctuelle d'une section de route ou d'autoroute, fait appel à un radar, soit fixe à onde continue, soit Doppler à impulsions. Une technique utilisant un radar fixe à onde continue pour extraire différents paramètres, tels que la vitesse ou la longueur, est par exemple décrite dans le document US-A-4.985.705. Par ailleurs, on se reportera au document FR 2.695.742 déposé par la Demanderesse pour la description d'un radar Doppler à impulsions, dont le positionnement particulier et l'algorithme associé permettent d'extraire différents paramètres (notamment le nombre de véhicules par voie de circulation, la vitesse des véhicules, la longueur des véhicules).

L'inconvénient majeur des trois technologies précédentes, fondées sur une analyse ponctuelle d'une section de route, est que la détection d'incident n'est pas immédiate. En effet, un incident survenant à proximité d'un point d'analyse n'est pas détecté, et seules les conséquences ultérieures de cet incident au point de mesure sont détectées. Le délai de détection peut être très long, de l'ordre de plusieurs minutes.

Comme nous l'avons dit précédemment, une deuxième technique d'analyse connue à ce jour consiste à réaliser une analyse globale d'une section de route ou d'autoroute, en surveillant cette section sur une zone de plusieurs centaines de mètres, et ce, de manière à détecter les incidents quasi-instantanément. Une seule technologie, encore au stade de développement, met en oeuvre cette technique en utilisant une caméra vidéo associée à un traitement d'images spécifique pour la D.A.I. Les inconvénients sont une portée de détection, donc une zone de surveillance, limitée à quelques centaines de mètres, et qui peut être fortement diminuée en cas de mauvaises conditions météorologiques (pluie, neige, brouillard), ou de luminosité, c'est-à-dire lorsque les risques d'incident sont les plus importants.

L'idée de la présente invention consiste à associer les avantages apportés par une technique d'analyse globale (rapidité de détection d'incident) aux avantages procurés par l'utilisation d'un radar (notamment, fonctionnement tout temps, nuit et jour, avec les mêmes performances).

Plus précisément, la présente invention a pour objet un procédé de surveillance du trafic de véhicules pouvant circuler sur au moins deux voies, du type consistant à émettre une onde hyperfréquence de forme prédéterminée selon un diagramme de rayonnement prédéfini, à recevoir des signaux réfléchis par les véhicules pendant une durée d'acquisition $T_A$ donnée, et à traiter les signaux reçus de manière à détecter les véhicules et à calculer, pour chaque distance, le nombre de véhicules i détectés ainsi que la vitesse instantanée $V_i(t)$ à un instant t donné de chaque véhicule, le procédé étant caractérisé en ce que, le diagramme de rayonnement ayant un axe de visée sensiblement parallèle à la direction des voies, et les étapes d'acquisition et de traitement des signaux étant réitérées sur des intervalles de temps (T) consécutifs, il comporte en outre une phase de détection automatique d'incident consistant à effectuer les étapes itératives suivantes :

- Une première étape de calcul de paramètres consistant à :

  - rechercher, à chaque instant t, si un véhicule i détecté dans l'intervalle de temps courant, correspond à un véhicule j détecté à un instant [$t$ - 1] de l'intervalle de temps précédent ;

  - pour tous les véhicules i correspondant à un véhicule j, calculer, à l'instant t, leur accélération $\gamma_i\,(t)$ par application de la relation

  $$\gamma_i(t) = \frac{|V_i(t)| - |V_j(t-1)|}{\Delta t}$$

  dans laquelle $\Delta\,t$ représente la durée entre les instants [$t$ - 1] et t, ainsi qu'une prédiction $V_i^P\,(t + 1)$ de leur vitesse à un temps [$t$ + 1] de l'intervalle de temps suivant, par application de la relation

  $$V_i^P\,(t + 1) = \gamma_i(t) \times \Delta t + V_i(t)$$

  - pour les autres véhicules i, initialiser leur accélération $\gamma_i\,(t)$ à la valeur nulle ;

  - éliminer du traitement tous les autres véhicules j ne correspondant à aucun véhicule i.

- Une deuxième étape de détection d'incident à partir des paramètres calculés lors de la première étape, par détection du passage de la vitesse instantanée ou prédite d'un véhicule i en-deçà d'un premier seuil de vitesse $V_{Seuil}$ prédéterminé.

L'invention sera mieux comprise au vu de la description ci-après, faite en référence aux figures annexées :

- Les figures la et 1b illustrent un exemple de diagramme de rayonnement, respectivement en élévation et en site, d'un système radar mettant en oeuvre le procédé selon l'invention ;
- La figure 2 illustre les étapes principales du procédé selon l'invention ;
- La figure 3 détaille l'étape 6 de calcul de paramètres de la figure 2 ;
- La figure 4 illustre des étapes possibles de calcul de paramètres supplémentaires selon l'invention;
- La figure 5 illustre le traitement de détection automatique à partir des paramètres calculés à l'étape 6 de la figure 2 ;
- La figure 6 représente un synoptique d'un système radar possible pour la mise en oeuvre du procédé selon l'invention.

La solution proposée pour résoudre le problème de la détection automatique d'incident consiste à prévoir un système radar qui puisse utiliser l'effet Doppler de manière à pouvoir extraire la vitesse instantanée des véhicules détectés, et qui possède également une capacité de discrimination en distance. Nous décrirons par la suite un exemple de système radar possible pour la mise en oeuvre du procédé selon l'invention.

Le diagramme de rayonnement utilisé à l'émission et à la réception doit être tel que son axe de visée soit sensiblement parallèle aux voies que l'on souhaite observer.

De manière préférentielle, le système radar est positionné à une hauteur h choisie selon la zone à observer, typiquement d'environ 10 mètres si l'on souhaite observer une zone sur plusieurs centaines de mètres, et ce, de manière à limiter les risques de masquage d'un véhicule par un autre. Par ailleurs, le système radar est placé de préférence au milieu des voies de circulation, la circulation sur ces voies ne s'effectuant pas forcément dans le même sens. Moyennant un choix adéquat du rayonnement du système radar, ce dernier sera capable d'observer toutes les voies de circulation ainsi que les deux bandes d'arrêt d'urgence, dans les deux sens de circulation, sur une longueur dépendant de la portée du radar. Le rayonnement peut être avantageusement en cosécante carrée symétrique en azimut et en cosécante carrée en élévation, de manière à ce que tous les signaux reçus par le radar soient sensiblement à la même puissance, et ce, quelle que soit la position du véhicule détecté dans la zone d'observation du radar.

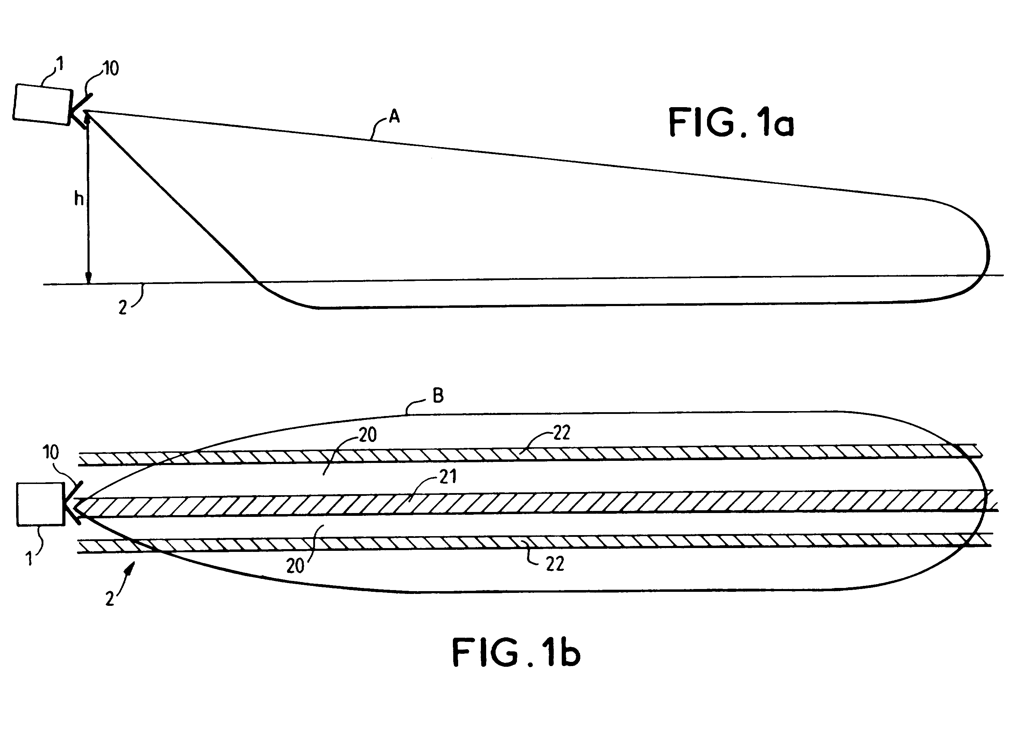

Les figures 1a et 1b illustrent, à titre d'exemple non limitatif, ce type de rayonnement respectivement en élévation (courbe A) et en azimut (courbe B), à partir d'un système radar 1 situé à une hauteur h par rapport à la route 2. L'antenne rayonnante est ici schématiquement représentée par la référence 10. Sur la figure 1b, on note que la zone observée est une portion d'autoroute constituée de deux voies 20 de circulation opposée, séparées par un terre-plein central 21, et de deux bandes d'arrêt d'urgence 22.

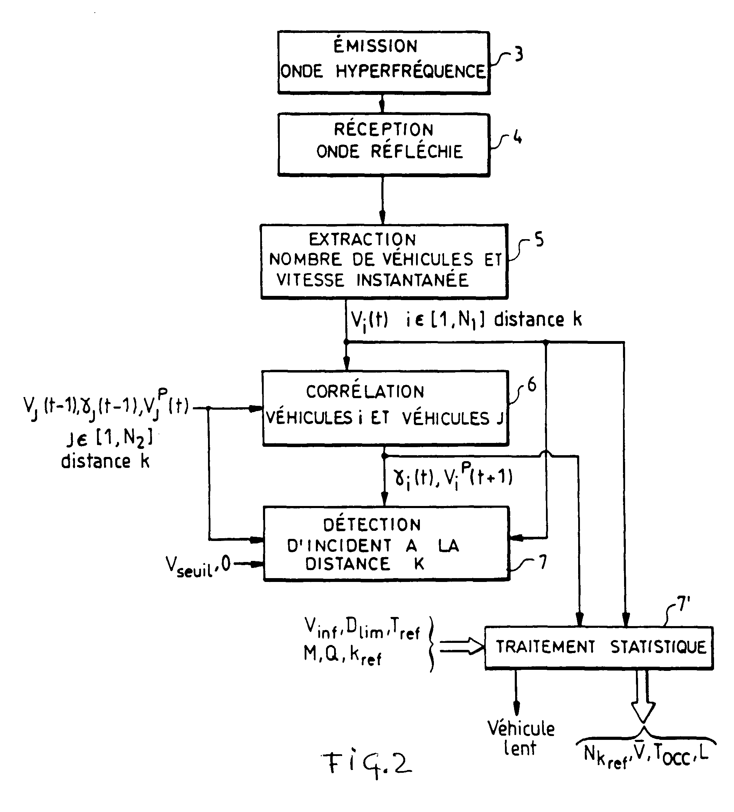

Les étapes principales du procédé de surveillance selon l'invention sont représentées schématiquement sur la figure 2, pour une case-distance donnée :

Suite à l'émission en 3 d'une onde hyperfréquence de forme prédéterminée et selon le diagramme de rayonnement décrit précédemment, on reçoit en 4 les signaux réfléchis par les véhicules présents dans la zone observée, pendant une durée d'acquisition $T_A$ prédéterminée, de l'ordre de quelques centaines de millisecondes. Le radar utilisé est de préférence un radar à impulsions, de sorte que l'onde émise est constituée d'un train d'impulsions, de fréquence porteuse comprise entre 3 et 100 GHz. L'utilisation d'un tel radar permet d'obtenir directement une discrimination en distance sur les véhicules détectés. Il reste néanmoins possible d'utiliser un radar à onde continue modulée linéairement en fréquence dont la chaîne de traitement comporte un traitement adapté par transformée de Fourier pour retrouver l'information distance.

L'étape suivante, référencée 5, est une étape classique de traitement de signal radar consistant à détecter, pour chaque distance ou case-distance k, les véhicules i présents et à extraire le nombre de véhicules i détectés ainsi que leur vitesse instantanée $V_i(t)$. Dans le cas où le radar utilisé est un radar Doppler à impulsions, l'étape 5 peut être réalisée classiquement de la façon suivante, pour chaque case-distance k:

- On réalise un échantillonnage des signaux reçus sur la durée d'acquisition sur un nombre N de valeurs des signaux dépendant de la précision vitesse que l'on souhaite.
- On réalise une transformée de Fourier rapide sur les N échantillons obtenus de manière à obtenir un spectre de raies.
- On recherche les maxima locaux supérieurs à un seuil déterminé en fonction de la portée du radar, les raies correspondantes étant relatives aux véhicules détectés, et l'indice des raies donnant directement la fréquence Doppler, donc, la vitesse instantanée du véhicule.

Le traitement précédent peut être affiné en appliquant, avant de réaliser la transformée de Fourier rapide, une fenêtre de pondération sur les échantillons de signaux obtenus, de manière à diminuer l'amplitude des lobes secondaires des raies d'analyse spectrale. La fenêtre de pondération est de préférence de type Hanning ou Hamming. En outre, si l'on souhaite être capable de déterminer le sens de circulation des véhicules détectés, la transformée de Fourier sur les N échantillons doit être complexe, c'est-à-dire qu'elle doit utiliser des échantillons provenant des voies en phase et en quadrature du radar. Il est alors nécessaire d'ajouter une étape de calcul du module carré des signaux issus de la transformée de Fourier rapide avant de faire la recherche des maxima locaux.

Les étapes précédentes 3, 4 et 5 mettent en oeuvre des techniques bien connues des radaristes et ne nécessitent pas, pour la compréhension de l'invention, de description plus détaillée.

Le procédé selon l'invention effectue les trois étapes précédentes de manière itératives, sur des intervalles de temps T prédéterminés. A l'issue de chaque intervalle de temps T, on dispose, pour chaque case-distance k, du nombre de véhicules détectés et de la vitesse instantanée de ces véhicules.

Le traitement de détection automatique d'incident selon l'invention part du principe qu'un incident est défini comme un véhicule qui s'arrête. Pour détecter un incident à une distance k, le procédé selon l'invention propose de détecter le passage d'un véhicule en-dessous d'un seuil vitesse. Pour ce faire, il est nécessaire de surveiller les véhicules dans chaque case-distance sur plusieurs intervalles de temps T et de déterminer l'évolution de leur vitesse d'un intervalle de temps à l'autre. Sur la figure 2, on a considéré, à titre d'exemple, que l'étape 5 fournissait, sur l'intervalle de temps courant, un nombre $N_1$ de véhicules i situés à la distance k et possédant une vitesse instantanée $V_i(t)$. Par ailleurs, l'itération précédente, faite sur un intervalle de temps précédent, a permis de trouver un nombre $N_2$ de véhicules j situés également à la distance k, et possédant une vitesse instantanée $V_j(t)$.

A partir de ces données, le procédé selon l'invention effectue une première étape 6 de calcul de certains paramètres tels que l'accélération $\gamma_i(t)$ de chaque véhicule i et une prédiction $V_i^P(t+1)$ sur la vitesse qu'aura ce véhicule à un instant suivant. Cette première étape étant effectuée à chaque intervalle de temps, on dispose également, à l'instant t, des accélérations $\gamma_j(t-1)$ et des prédictions de vitesses $V_i^P(t)$ relatives aux véhicules j traités sur l'intervalle de temps précédent. A l'issue de la première étape 6 de calcul des paramètres, le procédé selon l'invention réalise une seconde étape 7 de détection d'incident.

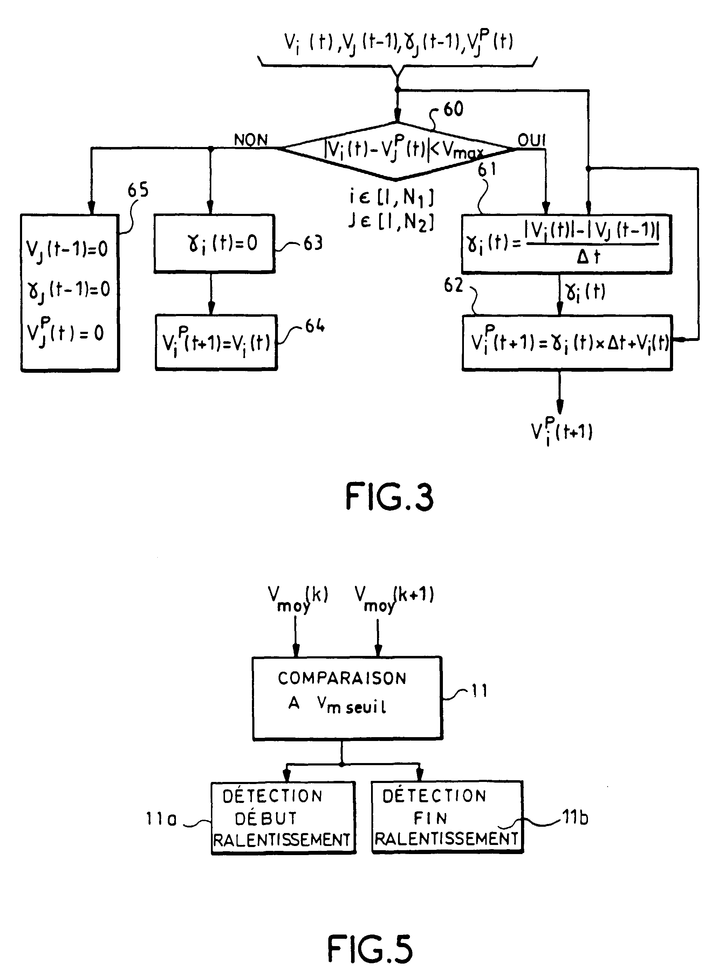

La première étape 6 de la phase de détection d'incident selon l'invention va maintenant être décrite en référence à la figure 3, laquelle illustre les différents calculs et tests effectués lors de cette étape 6 : le principe de cette étape consiste à rechercher si certains véhicules i détectés à l'instant t, font partie des véhicules j détectés à l'instant t-1, ce qui revient à faire une sorte de corrélation pour une même distance k entre certains des paramètres calculés à l'instant t-1, à savoir le nombre $N_2$ de véhicules j, leur vitesse instantanée $V_j(t-1)$, et la prédiction sur leur vitesse $V_j^P(t)$, et les paramètres dont on dispose à l'instant t, à savoir le nombre Ni de véhicules i, et leur vitesse instantanée $V_i(t)$.

Comme indiqué sur la figure 3 par un test 60, la recherche de correspondance entre un véhicule i et un véhicule j consiste à calculer, pour chaque véhicule i et pour chaque véhicule j, l'écart entre la prédiction $V_j^P(t)$ sur la vitesse du véhicule j et la vitesse instantanée $V_i(t)$ du véhicule i, puis à comparer la valeur absolue dudit écart à une valeur seuil $V_{MAX}$ prédéterminée. Trois cas sont possibles à l'issue de ce test 60 :

- Si la valeur absolue de l'écart est bien inférieure à la valeur seuil, on peut considérer que le véhicule i et le véhicule j correspondent à un même véhicule. On calcule alors en 61, l'accélération $\gamma_i(t)$ de ce véhicule par application de la relation

$$\gamma_i(t) = \frac{|V_i(t)| - |V_j(t-1)|}{\Delta t}$$

dans laquelle $\Delta t$ représente la durée entre les deux instants t et t-1.

Puis on calcule en 62 la prédiction sur la vitesse de ce véhicule à l'instant t+1 par l'application de la relation

$$V_i^P (t + 1) = \gamma_i(t) \times \Delta t + V_i(t)$$

- Si un véhicule i détecté à l'instant t ne peut être associé à aucun véhicule j (test 60 négatif), il doit être considéré comme étant un nouveau véhicule ayant pénétré dans la case-distance k. Dans ce cas, on initialise en 63 la valeur de son accélération $\gamma_i(t)$ à la valeur nulle, et on fait correspondre en 64 sa vitesse instantanée $V_i(t)$ à sa prédiction $V_i^P (t + 1)$.
- Si un véhicule j détecté à l'instant t-1 ne peut être associé à aucun véhicule i (test 60 également négatif), il faut considérer que ce véhicule est sorti de la case-distance k. On peut alors mettre en 65 tous les paramètres relatifs à ce véhicule j à la valeur nulle, pour ne plus en tenir compte dans la suite du traitement.

A l'issue de la première étape 6 de calcul de paramètres, on dispose donc, pour chaque véhicule i détecté, de sa vitesse instantanée, de son accélération, de la prédiction sur sa vitesse future, et, dans certains cas, de sa correspondance avec un véhicule j détecté pendant l'intervalle de temps précédent, avec les paramètres qui lui sont associés.

Comme nous l'avons dit précédemment, la détection d'un incident à une distance k consiste à détecter le passage de la vitesse d'un véhicule i en-decà d'un premier seuil de vitesse $V_{Seuil}$ prédéterminé. Pour ce faire, la seconde étape 7 de la phase de détection du procédé selon l'invention (voir figure 2) peut effectuer deux sortes de comparaisons possibles :

Dans un premier cas de figure, on considère qu'il y a incident provoqué par un véhicule i à la distance k lorsque les deux conditions suivantes sont réunies :

$$\begin{cases} V_i(t) \langle V_{seuil} \\ \\ \gamma_{i(t)} \langle 0 \end{cases}$$

Une autre variante possible consiste à considérer qu'un incident est provoqué par un véhicule i à la distance k lorsque les deux conditions suivantes sont réunies :

$$\begin{cases} V_i(t) \rangle V_{seuil} \\ \\ V_i^P (t + 1) \langle V_{seuil} \end{cases}$$

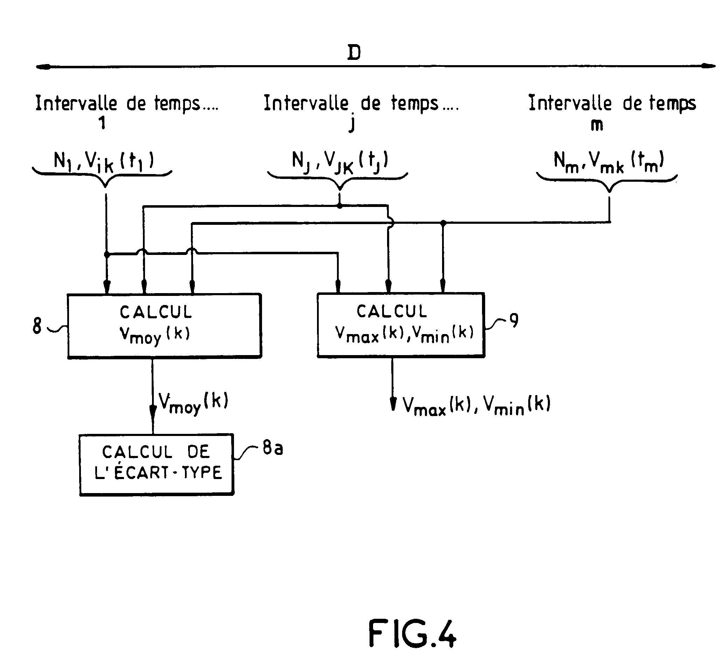

D'autres fonctionnalités peuvent être avantageusement ajoutées au procédé selon l'invention : Comme le montre la figure 4, il peut être notamment intéressant de prévoir une étape 8 de calcul de la vitesse moyenne des véhicules détectés sur plusieurs intervalles de temps, ou plus généralement sur une durée D prédéterminée, et ce, pour chaque case-distance k, ainsi qu'une étape 9 de calcul permettant d'extraire les vitesses maximales et minimales calculées sur cette durée D pour une case-distance k donnée. Sur la figure 4, on a supposé que la durée D correspondait à m intervalles de temps successifs, un intervalle de temps j, pour j variant de 1 à m, permettant de détecter un nombre $N_j$ de véhicules pour une distance k donnée, et de délivrer, à un instant $t_j$, la vitesse instantanée $V_{jk}(t_j)$ de chaque véhicule.

La figure 4 montre également une étape 8a de calcul de l'écart-type de la vitesse moyenne $V_{moy}(k)$ pour une case-distance k donnée.

L'information de vitesse moyenne par case-distance peut être avantageusement utilisée, selon le procédé de l'invention, pour effectuer un traitement de détection automatique de bouchon ou ralentissement.

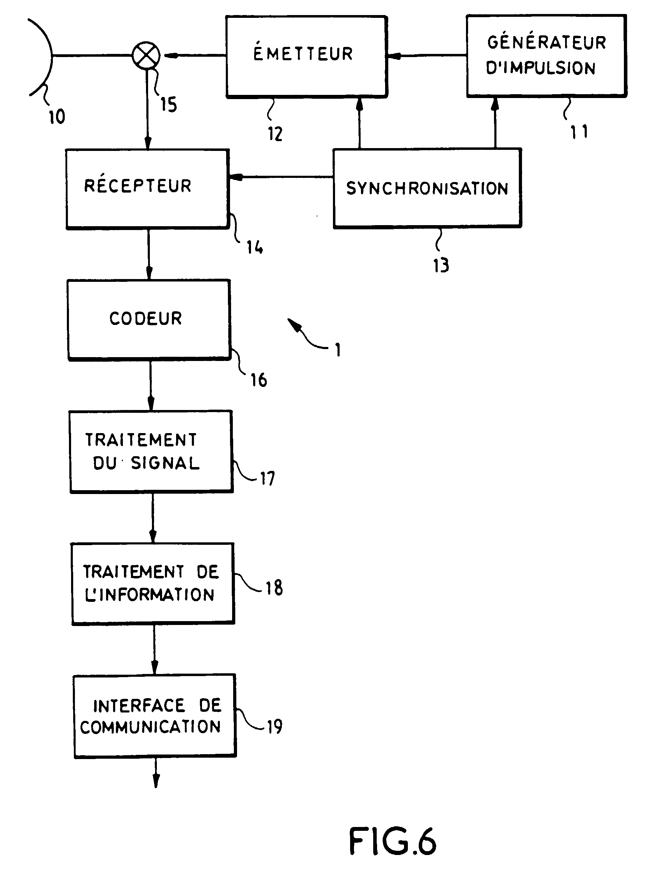

Un tel traitement est représenté sous forme de synoptique simplifié sur la figure 5 :

Il consiste à analyser les vitesses moyennes fournies à l'étape 8 (figure 4) pour deux cases-distance successives k et $k$ +1 en les comparant en 11 à un second seuil de vitesse $V_{mseuil}$ défini au préalable.

L'interprétation du résultat de la comparaison faite en 11 dépend du sens de circulation des véhicules :

Pour des véhicules s'éloignant par rapport au système radar, on détecte en 11a un début de ralentissement lorsque

$$V_{moy}(k) \rangle V_{mseuil} \text{ et } V_{moy}(k + 1) \langle V_{mseuil}$$

et, en 11b une fin de ralentissement lorsque

$$V_{moy}(k) \langle V_{mseuil} \text{ et } V_{moy}(k + 1) \rangle V_{mseuil}$$

Les conclusions précédentes doivent être inversées lorsqu'on s'intéresse à des véhicules se rapprochant du radar.

Le traitement de détection automatique de bouchon ou ralentissement peut être avantageusement utilisé pour inhiber la phase de détection d'incident. En effet, dans le cas d'un bouchon, le nombre d'incidents détectés en appliquant le procédé selon l'invention risque d'être important, et il peut être utile de réaliser un filtrage des incidents afin d'en limiter le volume.

Toujours dans le but de réduire le volume de traitement lors de la phase de détection automatique d'incident, on peut restreindre l'analyse aux véhicules possédant une vitesse modérée, par exemple de 40 km/h, ces derniers ayant une plus grande probabilité de générer un incident.

Le procédé selon l'invention peut en outre être amélioré par un traitement statistique représenté schématiquement en 7' sur la figure 2 :

Tout d'abord, la notion d'incident potentiel peut être étendue, selon une variante du procédé selon l'invention, à tout véhicule circulant à une vitesse anormalement faible par rapport au trafic de voies de circulation.

Pour indiquer la présence d'un véhicule lent dans une case-distance donnée, on cherche à détecter tout véhicule qui circule à une vitesse inférieure à une vitesse seuil prédéfinie $V_{inf}$, et ce pendant une durée supérieure à une durée limite $D_{lim}$.

La phase de détection automatique d'incident appliquée à ce véhicule particulier est alors complétée, selon l'invention, par une étape lors de laquelle on vérifie, au bout de la durée limite $D_{lim}$, si le véhicule de vitesse instantanée inférieur à $V_{inf}$ est toujours détecté dans la case-vitesse considérée. Dans ce cas, on génère une alarme indiquant la présence d'un véhicule lent.

Par ailleurs, il peut être intéressant, à partir du procédé de détection automatique d'incident objet de l'invention, d'extraire, pour une case-distance $k_{ref}$ prédéterminée de référence et par sens de circulation, certains paramètres représentatifs de l'état du trafic dans la zone surveillée, tels que le comptage précis de véhicules circulant, durant une période d'analyse $T_{ref}$ particulière, dans la case-distance $k_{ref}$, la vitesse moyenne de ces véhicules, le taux d'occupation des chaussées par sens de circulation, ou encore le taux de poids lourds. Nous détaillons ci-après les étapes du procédé selon l'invention permettant l'obtention des paramètres précédents, ces étapes étant schématisées en 7' sur la figure 2 :

En ce qui concerne le comptage des véhicules dans la case-distance $k_{ref}$, sur la durée $T_{ref}$, la première étape du procédé selon l'invention permet, comme nous l'avons vu précédemment, de détecter, à un instant t, l'apparition de nouveaux véhicules, c'est-à-dire ceux pour lesquels on a initialisé l'accélération à la valeur nulle (étape 63, figure 3), et de détecter la disparition de véhicules, c'est-à-dire ceux que l'on a éliminé du traitement (étape 65, figure 3).

Ainsi, à partir d'une pluralité de phases 6, 7 de détection automatique, on peut effectuer un comptage du nombre $N_{ref}$ de véhicules étant passés dans la case-distance $k_{ref}$ pendant la période d'analyse $T_{ref}$ en utilisant les résultats obtenus lors de la première étape des phases. Préférentiellement, chaque véhicule est comptabilisé à partir du moment où la première étape 6 de calcul de paramètre l'élimine du traitement.

On peut alors déduire la vitesse moyenne $\overline{V}$ sur la case-distance $k_{ref}$ par application de la relation :

$$\overline{V} = \left( \frac{1}{N_{k_{ref}}} \sum_{i=1}^{N_{k_{ref}}} \frac{1}{V_i} \right)^{-1}$$

dans laquelle $V_i$ est la vitesse instantanée de chaque véhiculé comptabilisé.

Le taux d'occupation pour la case-distance $k_{ref}$ est défini par le taux de présence d'un véhicule dans la case-distance $k_{ref}$ pendant la période d'analyse $T_{ref}$. Dans une variante du procédé selon l'invention, une étape supplémentaire de calcul permet de fournir ce taux d'occupation $T_{OCC}$ par application de la relation :

$$T_{OCC} = \frac{N_i}{M.Q}$$

dans laquelle :

- $N_i$ est le nombre de détections par sens de circulation obtenu selon le procédé de l'invention pendant la période d'analyse $T_{ref}$,
- M est le nombre de phases de détection automatique d'incident réalisées pendant $T_{ref}$,
- Q est le nombre de voies du sens de circulation.

Enfin, on peut déduire de l'étape de comptage de véhicule précédemment décrite le temps de présence $T_p$ de chaque véhicule dans la case-distance $b_{ref}$, et par suite la longueur L de ces véhicules par application de la relation :

$$L = V\,T_p$$

où V est la vitesse instantanée de ces véhicules. Cela peut permettre d'effectuer une classification des véhicules selon leur longueur en distinguant entre les véhicules poids lourds, qui ont une longueur supérieure à une longueur prédéfinie $L_{seuil}$, et véhicules légers.

L'extraction de ces paramètres peut être utilisée pour calculer notamment le taux de poids lourds dans la case-distance $k_{ref}$ pendant la période d'analyse.

La figure 6 illustre un exemple de système radar pour la mise en oeuvre du procédé selon l'invention, sous forme de synoptique simplifié :

Le radar utilisé est ici un radar à impulsions de fréquence porteuse choisie entre 3 et 100 GHz. Plus la fréquence sera élevée, plus l'antenne 10, utilisée pour l'émission et la réception, sera compacte. Un générateur d'impulsions 11' met en forme les impulsions qui sont amplifiées par l'émetteur 12. Une synchronisation 13 permet un fonctionnement alterné entre l'émetteur et le récepteur 14, lequel reçoit et amplifie les signaux reçus par l'antenne 10 via un circulateur 15. Les signaux analogiques issus du récepteur sont classiquement numérisés dans un module de codage 16, les échantillons étant traités dans un module de traitement de signal 17 de façon à détecter les véhicules, leurs vitesses et leurs distances par rapport au radar. Un module de traitement de l'information 18 permet de mettre en oeuvre les phases de détection automatique d'incident et de ralentissement du procédé selon l'invention. Une interface 19 permet ensuite de transmettre les informations (ralentissement ou incident) vers un centre de gestion des informations.

A titre d'exemple non limitatif, un tel système radar peut avoir une résolution distance d'environ 10 mètres, compatible des dimensions des véhicules, un domaine de vitesse non ambiguë de $\pm$ 200 km/h, et une résolution vitesse d'environ 3 km/h.

Le système radar décrit précédemment peut être utilisé en tout endroit où l'on souhaite une connaissance rapide des incidents y survenant ou de l'état du trafic. Les informations fournies par le module 18 peuvent être exploitées automatiquement par des systèmes de gestion de trafic, notamment dans le but d'informer directement les usagers de la route, par l'intermédiaire de panneaux indicateurs à messages variables.

## Revendications

1. Procédé de surveillance du trafic de véhicules pouvant circuler sur au moins deux voies, du type consistant à émettre (3) une onde hyperfréquence de forme prédéterminée selon un diagramme de rayonnement prédéfini, à recevoir (4) des signaux réfléchis par les véhicules pendant une durée d'acquisition $T_A$ donnée, et à traiter (5) les signaux reçus de manière à détecter les véhicules et à calculer, pour chaque distance, le nombre de véhicules détectés ainsi que la vitesse instantanée $V_i(t)$ à un instant t donné de chaque véhicule, le procédé étant caractérisé en ce que, le diagramme de rayonnement ayant un axe de visée sensiblement parallèle à la direction des voies, et les étapes d'acquisition et de traitement des signaux étant réitérées sur des intervalles de temps (T) consécutifs, il comporte en outre une phase (6, 7) de détection automatique d'incident consistant à effectuer les étapes itératives suivantes :

   • Une première étape (6) de calcul de paramètres consistant à :

      - rechercher, à chaque instant t, si un véhicule i détecté dans l'intervalle de temps courant, correspond à un véhicule j détecté à un instant [$t$ - 1] de l'intervalle de temps précédent;
      - pour tous les véhicules i correspondant à un véhicule j, calculer (61), (62), à l'instant t, leur accélération $\gamma_i$ ($t$) par application de la relation

$$\gamma_i(t) = \frac{|V_i(t)| - |V_j(t - 1)|}{\Delta t}$$

dans laquelle $\Delta t$ représente la durée entre les instants [$t$ - 1] et t, ainsi qu'une prédiction $V_i^P$ ($t$ + 1) de leur vitesse à un temps [t + 1] de l'intervalle de temps suivant, par application de la relation

$$V_i^P \ (t + 1) = \gamma_i(t) \times \Delta t + V_i(t)$$

      - pour les autres véhicules i, initialiser (63) leur accélération $\gamma_i$ ($t$) à la valeur nulle ;
      - éliminer (65) du traitement tous les autres véhicules j ne correspondant à aucun véhicule i.

   • Une deuxième étape (7) de détection d'incident à partir des paramètres calculés lors de la première étape, par détection du passage de la vitesse instantanée ou prédite d'un véhicule i en-deçà d'un premier seuil de vitesse $V_{Seuil}$ prédéterminé.

2. Procédé selon la revendication 1, caractérisé en ce que la recherche de correspondance entre un véhicule i et un véhicule j consiste à calculer (60), pour chaque véhicule i et pour chaque véhicule j, l'écart entre la prédiction $V_j^P$ (t) sur la vitesse du véhicule j et la vitesse instantanée $V_i(t)$ du véhicule i, puis à comparer la valeur absolue de l'écart à une valeur seuil $V_{max}$ prédéterminée au-delà de laquelle les véhicules i et j sont considérés comme distincts.

3. Procédé selon l'une quelconque des revendications précédentes, caractérisé en ce que la deuxième étape (7) de détection d'incident consiste à comparer, pour chaque véhicule i, la vitesse $V_i(t)$ audit premier seuil de vitesse $V_{Seuil}$, et l'accélération $\gamma_i(t)$ à la valeur nulle, et à détecter un incident lorsque la vitesse $V_i(t)$ et l'accélération sont inférieures respectivement au premier seuil de vitesse $V_{Seuil}$ et à la valeur nulle.

4. Procédé selon l'une quelconque des revendications 1 et 2, caractérisé en ce que la deuxième étape (7) de détection d'incident consiste à comparer, pour chaque véhicule i, la vitesse $V_i(t)$ et la prédiction $V_i^P$ $(t + 1)$ sur la vitesse par rapport audit premier seuil de vitesse $V_{Seuil}$ donné, et à détecter un incident lorsque la vitesse $V_i(t)$ et la prédiction $V_i^P(t + 1)$ sont respectivement supérieure et inférieure au premier seuil de vitesse $V_{Seuil}$.

**5.** Procédé selon l'une quelconque des revendications précédentes, caractérisé en ce qu'il comporte en outre une étape (8) de calcul de la vitesse moyenne de tous les véhicules détectés, à une distance k donnée, pendant une durée D prédéterminée.

**6.** Procédé selon la revendication 5, caractérisé en ce qu'il comporte en outre une étape (9) d'extraction des vitesses maximale et minimale calculées sur les véhicules détectés à une distance donnée pendant la durée D.

**7.** Procédé selon l'une quelconque des revendications 5 et 6, caractérisé en ce qu'il comporte en outre une étape (8a) de calcul de l'écart-type de la vitesse sur la durée D.

**8.** Procédé selon la revendication 5, caractérisé en ce qu'il comporte en outre une étape (11, 11a, 11b) de détection de bouchon ou de ralentissement consistant à :

- effectuer (11) une comparaison des vitesses moyennes $V_{moy}(k)$ et $V_{moy}(k + 1)$ calculées pour deux distances k, k+1 successives, par rapport à un second seuil de vitesse $V_{mseuil}$.
- détecter un début de ralentissement (11a) ou une fin de ralentissement (11b) à partir du résultat de la comparaison.

**9.** Procédé selon la revendication 8, caractérisé en ce que l'étape de détection de bouchon inhibe la phase de détection automatique d'incident lorsqu'un ralentissement a été détecté.

**10.** Procédé selon l'une quelconque des revendications précédentes, caractérisé en ce que la phase de détection automatique d'incident est appliquée à tout véhicule dont la vitesse instantanée est inférieure à une vitesse seuil prédéfinie $V_{inf}$, et en ce qu'il comporte en outre une étape lors de laquelle on vérifie si un véhicule est toujours détecté au bout d'une durée supérieure à une durée limite $D_{lim}$.

**11.** Procédé selon l'une quelconque des revendications précédentes, caractérisé en ce qu'il comporte plusieurs phases (6, 7) successives de détection automatique d'incidents, et en ce que la première étape desdites phases est utilisée en outre pour réaliser un comptage des véhicules passant dans une case-distance $k_{ref}$ de référence pendant une période d'analyse $T_{ref}$ prédéfinie.

**12.** Procédé selon la revendication 11, caractérisé en ce qu'il comporte une étape de calcul de la vitesse moyenne $\bar{V}$ des véhicules sur la case-distance $k_{ref}$ pendant la période d'analyse $T_{ref}$.

**13.** Procédé selon l'une quelconque des revendications 11 et 12, caractérisé en ce qu'il comporte une étape de calcul du taux d'occupation $T_{occ}$ de la case-distance $k_{ref}$ pendant la période d'analyse $T_{ref}$ par application de la relation :

$$T_{OCC} = \frac{N_i M.Q}{\,}$$

dans laquelle :

- $N_i$ est le nombre de détections par sens de circulation obtenu selon le procédé de l'invention pendant la période d'analyse $T_{ref}$,
- M est le nombre de phases de détection automatique d'incident réalisées pendant $T_{ref}$,
- Q est le nombre de voies du sens de circulation.

**14.** Procédé selon la revendication 11, caractérisé en ce qu'il comporte une étape de calcul du temps de présence $T_p$ d'un véhicule dans la case-distance $k_{ref}$, et de sa longueur.


**Patentansprüche**

**1.** Verfahren zur Verkehrsüberwachung von Fahrzeugen, die auf mindestens zwei Fahrspuren fahren können, wobei eine Hochfrequenzwelle vorbestimmter Form gemäß einem vordefinierten Strahlungsdiagramm ausgesendet wird (3), die von den Fahrzeugen reflektierten Signale während einer gegebenen Erfassungsdauer $T_A$ empfangen werden (4) und die empfangenen Signale bearbeitet werden (5), sodaß die Fahrzeuge erfaßt und die Anzahl von erfaßten Fahrzeugen i sowie ihre augenblickliche Geschwindigkeit $V_i(t)$ in einem gegebenen Zeitpunkt t und für jede Entfernung berechnet werden, dadurch gekennzeichnet, daß das Strahlungsdiagramm eine Hauptrichtung im wesentlichen parallel zur Richtung der Fahrspuren hat, daß die Schritte der Erfassung und Verarbeitung der Signale in aufeinanderfolgenden Zeitintervallen (T) wiederholt werden, und daß das Verfahren außerdem eine Phase (6, 7) der automatischen Störfallerfassung enthält, die darin besteht, die nachfolgenden iterativen Schritte durchzuführen:

- Ein erster Schritt (6) zur Berechnung von Parametern besteht darin,

- in jedem Zeitpunkt t zu ermitteln, ob ein im laufenden Zeitintervall erfaßtes Fahrzeug i einem Fahrzeug j entspricht, das bereits in einem Zeitpunkt (t-1) des vorausgegangenen Zeitintervalls erfaßt worden war;

- für alle einem Fahrzeug j entsprechenden Fahrzeuge i im Zeitpunkt t ihre Beschleunigung $\gamma_i(t)$ durch Anwendung der folgenden Gleichung zu berechnen (61):

$$\gamma_i(t) = \frac{\left| V_i(t) \right| - \left| V_j(t-1) \right|}{\Delta t}$$

wobei $\Delta t$ die Zeitdauer zwischen den Zeitpunkten (t-1) und t ist, sowie einen Vorhersagewert $V_i^P(t+1)$ der Geschwindigkeit für einen Zeitpunkt (t+1) nach dem nächstfolgenden Zeitintervall durch Anwendung der folgenden Gleichung zu berechnen (62):

$$V_i^P(t+1) = \gamma_i(t) \cdot \Delta t + V_i(t),$$

- für alle anderen Fahrzeuge i ihre Beschleunigung $\gamma_i(t)$ auf den Wert null zu initialisieren (63),

- alle Fahrzeuge j, die keinem Fahrzeug i entsprechen, aus der Bearbeitung zu eliminieren (65);

• ein zweiter Schritt (7) der Erfassung eines Störfalls ausgehend von den im ersten Schritt berechneten Parametern besteht in der Erfassung eines Fahrzeugs i, dessen augenblickliche oder vorhergesagte Geschwindigkeit unter einen ersten vorbestimmten Geschwindigkeitsschwellwert $V_s$ absinkt.

2. Verfahren nach Anspruch 1, dadurch gekennzeichnet, daß die Suche nach einer Korrespondenz zwischen einem Fahrzeug i und einem Fahrzeug j darin besteht, für jedes Fahrzeug i und für jedes Fahrzeug j den Abstand zwischen der vorhergesagten Geschwindigkeit $V_j^P(t)$ des Fahrzeugs j und der augenblicklichen Geschwindigkeit $V_i(t)$ des Fahrzeugs i zu berechnen (60) und dann den Absolutwert des Abstands mit einem vorbestimmten Schwellwert $V_{MAX}$ zu vergleichen, jenseits dem die Fahrzeuge i und j als unterschiedlich betrachtet werden.

3. Verfahren nach einem beliebigen der vorstehenden Ansprüche, dadurch gekennzeichnet, daß der zweite Schritt (7) der Erfassung eines Störfalls darin besteht, für jedes Fahrzeug i die Geschwindigkeit $V_i$(t) mit dem ersten Geschwindigkeitsschwellwert $V_s$ und die Beschleunigung $\gamma_i(t)$ mit dem Wert null zu vergleichen und einen Störfall festzustellen, wenn die Geschwindigkeit $V_i$(t) niedriger als der erste Geschwindigkeitsschwellwert $V_s$ ist und die Beschleunigung geringer als der Wert null ist.

4. Verfahren nach einem beliebigen der Ansprüche 1 und 2, dadurch gekennzeichnet, daß der zweite Schritt (7) der Erfassung eines Störfalls darin besteht, für jedes Fahrzeug i die Geschwindigkeit $V_i$(t) und den Vorhersagewert $V_i^P(t+1)$ der Geschwindigkeit mit dem gegebenen ersten Geschwindigkeitsschwellwert $V_s$ zu vergleichen und einen Störfall festzustellen, wenn die Geschwindigkeit $V_i$(t) größer und der Vorhersagewert $V_i^P(t+1)$ kleiner als der Geschwindigkeitsschwellwert $V_s$ ist.

5. Verfahren nach einem beliebigen der vorstehenden Ansprüche, dadurch gekennzeichnet, daß es außerdem einen Schritt (8) aufweist, in dem die mittlere Geschwindigkeit aller erfaßten Fahrzeuge in einem gegebenen Entfernungsfach k während einer vorbestimmten Dauer D berechnet wird.

6. Verfahren nach Anspruch 5, dadurch gekennzeichnet, daß es außerdem einen Verfahrensschritt (9) aufweist, in dem die höchste und niedrigste berechnete Geschwindigkeit der erfaßten Fahrzeuge in einer gegebenen Entfernung während der Dauer D ermittelt werden.

7. Verfahren nach einem der Ansprüche 5 und 6, dadurch gekennzeichnet, daß es außerdem einen Schritt (8a) aufweist, in dem die Standardabweichung der Geschwindigkeit während der Dauer D berechnet wird.

8. Verfahren nach Anspruch 5, dadurch gekennzeichnet, daß es außerdem einen Verfahrensschritt (11, 11a, 11b) aufweist, in dem ein Stau oder eine Verlangsamung des Verkehrs festgestellt wird und der darin besteht,

- einen Vergleich der für zwei aufeinanderfolgende Entfernungen k und k+1 berechneten mittleren Geschwindigkeiten $V_{moy}(k)$ und $V_{moy}(k+1)$ mit einem zweiten Geschwindigkeitsschwellwert $V_{mS}$ durchzuführen,

- ausgehend von dem Vergleichsergebnis den Beginn einer Verlangsamung (11a) oder das Ende einer Verlangsamung zu erfassen (11b).

9. Verfahren nach Anspruch 8, dadurch gekennzeichnet, daß der Schritt der Erfassung eines Staus die Phase der automatischen Erfassung eines Störfalls unterbindet, wenn eine Verlangsamung erfaßt worden ist.

10. Verfahren nach einem beliebigen der vorstehenden Ansprüche, dadurch gekennzeichnet, daß die Phase der automatischen Erfassung eines Störfalls auf alle Fahrzeuge angewendet wird, deren augenblickliche Geschwindigkeit geringer als ein vorbestimmter Schwellwert $V_{inf}$ ist, und daß es außerdem einen Schritt enthält, bei dem überprüft wird, ob ein Fahrzeug nach einer einen Grenzwert $D_{lim}$ übersteigenden Dauer immer noch erfaßt wird.

**11.** Verfahren nach einem beliebigen der vorstehenden Ansprüche, dadurch gekennzeichnet, daß es mehrere aufeinanderfolgende Phasen (6, 7) der automatischen Erfassung von Störfällen enthält und daß der erste Schritt dieser Phasen außerdem zum Zählen der Fahrzeuge verwendet wird, die ein Bezugsentfernungsfach $k_{ref}$ während einer vordefinierten Analyseperiode $T_{ref}$ durchfahren.

**12.** Verfahren nach Anspruch 11, dadurch gekennzeichnet, daß es einen Verfahrensschritt der Berechnung der mittleren Geschwindigkeit $\overline{V}$ der Fahrzeuge in dem Entfernungsfach $k_{ref}$ während der Analyseperiode $T_{ref}$ aufweist.

**13.** Verfahren nach einem beliebigen der Ansprüche 11 und 12, dadurch gekennzeichnet, daß es einen Verfahrensschritt aufweist, in dem die Verkehrsdichte $T_{OCC}$ im Entfernungsfach $k_{ref}$ während der Analyseperiode $T_{ref}$ durch Anwendung der folgenden Beziehung berechnet wird:

$$T_{OCC} = N_i/(M \cdot Q)$$

wobei $N_i$ die Anzahl von Erfassungen je Fahrtrichtung gemäß dem erfindungsgemäßen Verfahren während der Analyseperiode $T_{ref}$, M die Anzahl von automatischen Störfallerfassungsphasen während der Periode $T_{ref}$ und Q die Anzahl von Fahrspuren je Fahrtrichtung bedeuten.

**14.** Verfahren nach Anspruch 11, dadurch gekennzeichnet, daß es einen Verfahrensschritt der Berechnung der Zeitdauer $T_P$, während der ein Fahrzeug sich im Entfernungsfach $k_{ref}$ befindet, und zur Berechnung seiner Länge aufweist.

**Claims**

**1.** Process for monitoring the traffic of vehicles able to travel on at least two lanes, of the type consisting in transmitting (3) a UHF wave of predetermined form in accordance with a predefined radiation pattern, in receiving (4) signals reflected by the vehicles over a given duration of acquisition $T_A$, and in processing (5) the received signals in such a way as to detect the vehicles and in calculating, for each distance, the number of vehicles i detected as well as the instantaneous speed $V_i(t)$ at a given instant t of each vehicle, the process being characterised in that, the radiation pattern having an axis of aim substantially parallel to the direction of the lanes, and the steps of acquiring and processing the signals being repeated over consecutive time intervals (T), it furthermore includes an automatic incident detection phase (6, 7) consisting in performing the following iterative steps:

- A first step (6) of calculating parameters consisting in:

  - investigating, at each instant t, whether a vehicle i detected in the current time interval corresponds to a vehicle j detected at an instant [*t-1*] of the preceding time interval;
  - for all the vehicles i corresponding to a vehicle j, calculating (61), (62), at the instant t, their acceleration $\gamma_i(t)$ by applying the relation

  $$\gamma_i(t) = \frac{|V_i(t)| - |V_j(t-1)|}{\Delta t}$$

  in which $\Delta t$ represents the duration between the instants [*t-1*] and t, as well as a prediction $V_i^P(t+1)$ of their speed at a time [*t+1*] of the following time interval, by applying the relation

  $$V_i^P(t+1) = \gamma_i(t) \times \Delta t + V_i(t)$$

  - for the other vehicles i, initialising (63) their acceleration $\gamma_i(t)$ to the zero value;
  - eliminating (65) from the processing all the other vehicles j not corresponding to any vehicle i.

- A second step (7) of incident detection based on the parameters calculated in the first step, by detecting the passing of the instantaneous or predicted speed of a vehicle i below a first predetermined speed threshold $V_{thresh}$.

**2.** Process according to claim 1, characterised in that the search for correspondence between a vehicle i and a vehicle j consists in calculating (60), for each vehicle i and for each vehicle j, the discrepancy between the prediction $V_j^P(t)$ as to the speed of vehicle j and the instantaneous speed $V_i(t)$ of vehicle i, and in then comparing the absolute value of the discrepancy with a predetermined threshold value $V_{max}$ beyond which vehicles i and j are regarded as distinct.

**3.** Process according to either of the preceding claims, characterised in that the second step (7) of incident detection consists in comparing, for each vehicle i, the speed $V_i(t)$ with said first speed threshold $V_{thresh}$, and the acceleration $\gamma_i(t)$ with the zero value, and in detecting an incident when the speed $V_i(t)$ and the acceleration are respectively less than the first speed threshold $V_{thresh}$ and the zero value.

**4.** Process according to either of claims 1 and 2, characterised in that the second step (7) of incident detection consists in comparing, for each vehicle i, the speed $V_i(t)$ and the prediction $V_i^P(t+1)$ of the speed with respect to said first given speed threshold $V_{thresh}$, and in detecting an incident when the speed $V_i(t)$ and the prediction $V_i^P(t+1)$ are respectively greater than and less than the first speed threshold $V_{thresh}$.

**5.** Process according to any of the preceding claims, characterised in that it furthermore includes a step (8) of calculating the mean speed of all the vehicles detected, at a given distance k, over a predetermined duration D.

**6.** Process according to claim 5, characterised in that it furthermore includes a step (9) of extracting the maximum and minimum speeds calculated in regard to the vehicles detected at a given distance over the duration D.

**7.** Process according to either of claims 5 and 6, characterised in that it furthermore includes a step (8a) of calculating the standard deviation of the speed over the duration D.

**8.** Process according to claim 5, characterised in that it furthermore includes a hold-up or slow-down detection step (11, 11a, 11b) consisting in:

- making (11) a comparison of the mean speeds $V_{mean}(k)$ and $V_{mean}(k+1)$ calculated for two successive distances k,k+1, with respect to a second speed threshold $V_{mthresh}$,
- detecting a start of slow-down (11a) or an end of slow-down (11b) on the basis of the result of the comparison.

**9.** Process according to claim 8, characterised in that the hold-up detection step disables the automatic incident detection phase when a slow-down has been detected.

**10.** Process according to any of the preceding claims, characterised in that the automatic incident detection phase is applied to any vehicle whose instantaneous speed is lower than a predefined threshold speed $V_{lower}$, and in that it furthermore includes a step in which a check is made as to whether a vehicle is still detected after a duration greater than a limit duration $D_{lim}$.

**11.** Process according to any of the preceding claims, characterised in that it includes several successive phases (6, 7) of automatic detection of incidents, and in that the first step of said phases is furthermore used to make a count of the vehicles passing through a reference distance bracket $k_{ref}$ during a predefined analysis period $T_{ref}$.

**12.** Process according to claim 11, characterised in that it includes a step of calculating the mean speed $\bar{V}$ of the vehicles over the distance bracket $k_{ref}$ during the analysis period $T_{ref}$.

**13.** Process according to either of claims 11 and 12, characterised in that it includes a step of calculating the occupancy factor $T_{OCC}$ of the distance bracket $k_{ref}$ during the analysis period $T_{ref}$ by applying the relation:

$$T_{OCC} = \frac{N_i}{M.Q}$$

in which:

- $N_i$ is the number of detections per direction of flow obtained according to the process of the invention during the analysis period $T_{ref}$,
- M is the number of automatic incident detection phases undertaken during $T_{ref}$,
- Q is the number of lanes in the direction of flow.

**14.** Process according to claim 11, characterised in that it includes a step of calculating the time of presence $T_p$ of a vehicle in the distance bracket $k_{ref}$, and its length.

FIG. 1a

FIG. 1b

EP 0 755 524 B1

ÉMISSION
ONDE HYPERFRÉQUENCE ⟩–3

↓

RÉCEPTION
ONDE RÉFLÉCHIE ⟩–4

↓

EXTRACTION
NOMBRE DE VÉHICULES ET
VITESSE INSTANTANÉE ⟩–5

↓ $V_i(t)$  $i \in [1, N_1]$ distance k

CORRÉLATION
VÉHICULES i ET VÉHICULES J ⟩–6

$V_J(t-1), \gamma_J(t-1), V_J^P(t)$
$J \in [1, N_2]$
distance k

$\gamma_i(t), V_i^P(t+1)$

DÉTECTION
D'INCIDENT A LA
DISTANCE K ⟩–7

$V_{seuil}, 0$

$V_{inf}, D_{lim}, T_{ref}$
$M, Q, k_{ref}$ ⟩⟹ TRAITEMENT STATISTIQUE ⟩–7'

↓
Véhicule
lent

⟹
$N_{k_{ref}}, \bar{V}, T_{occ}, L$

Fig.2

13

$$V_i(t), V_J(t-1), \gamma_J(t-1), V_J^P(t)$$

```
                              ┌── 60
        NON  ◄───────◄ |V_i(t) - V_J^P(t)| < V_max ►────► OUI
                                                          ┌── 61

                          i ∈ [1, N_1]
                          J ∈ [1, N_2]
```

┌──── 65 ────┐         ┌─────────────┐              ┌──────────────────────────┐
│ $V_J(t-1)=0$ │        │ $\gamma_i(t)=0$ ── 63      │ $\gamma_i(t) = \dfrac{|V_i(t)| - |V_J(t-1)|}{\Delta t}$ │
│              │        └─────────────┘              └──────────────────────────┘
│ $\gamma_J(t-1)=0$ │           │                      62 ─┐         │ $\gamma_i(t)$
│              │        ┌─────────────┐              ┌──────────────────────────┐
│ $V_J^P(t) = 0$ │      │ $V_i^P(t+1)=V_i(t)$ ── 64   │ $V_i^P(t+1) = \gamma_i(t) \times \Delta t + V_i(t)$ │
└──────────────┘        └─────────────┘              └──────────────────────────┘

$$V_i^P(t+1)$$

## FIG.3

$$V_{moy}(k) \qquad V_{moy}(k+1)$$

┌─────────────────────────┐
│ COMPARAISON             │ ── 11
│ A  $V_{m\,seuil}$       │
└─────────────────────────┘

┌──────────────────┐      ┌──────────────────┐
11a ──│ DÉTECTION        │   │ DÉTECTION        │── 11b
      │ DÉBUT            │   │ FIN              │
      │ RALENTISSEMENT   │   │ RALENTISSEMENT   │
      └──────────────────┘   └──────────────────┘

## FIG.5

D

Intervalle de temps....
1

Intervalle de temps....
j

Intervalle de temps
m

$N_1, V_{ik}(t_1)$

$N_J, V_{JK}(t_J)$

$N_m, V_{mk}(t_m)$

8 — CALCUL
$V_{moy}(k)$

CALCUL
$V_{max}(k), V_{min}(k)$ — 9

$V_{moy}(k)$

$V_{max}(k), V_{min}(k)$

CALCUL DE
L'ÉCART·TYPE — 8a

FIG.4

FIG.6